# EUROPÄISCHE PATENTSCHRIFT

(11) **EP 2 473 872 B1**
(45) Veröffentlichungstag und Bekanntmachung des Hinweises auf die Patenterteilung: **16.05.2018**
(21) Anmeldenummer: 10742838.5
(22) Anmeldetag: 17.08.2010
(51) Int. Cl.: G02B 6/00, E06B 3/66

(54) **BELEUCHTETE SCHEIBENANORDNUNG**
ILLUMINATED PANE ARRANGEMENT
DISPOSITIF DE PANNEAUX DE VERRE ÉCLAIRÉ

(30) Priorität: 03.09.2009 DE 102009039885
(43) Veröffentlichungstag der Anmeldung: 11.07.2012
(73) Patentinhaber: Saint-Gobain Glass France, 92400 Courbevoie (FR)
(72) Erfinder: MESSERE, Rino, B-4577 Modave (BE); MÜLLER, Marco, 52525 Waldfeucht (DE); GILLISSEN, Manfred, 52134 Herzogenrath (DE); DE CALUWE, Ronny, NL-4584 Kuitaart (NL)
(74) Vertreter: Lendvai, Tomas
(86) Internationale Anmeldenummer: PCT/EP2010/061943
(87) Internationale Veröffentlichungsnummer: WO 2011/026728

(56) Entgegenhaltungen:
- WO-A1-02/052192
- WO-A1-2006/065049
- DE-A1-102005 061 855
- US-A1- 2004 031 234
- US-B1- 6 447 135

## Beschreibung

Die Erfindung betrifft eine Scheibenanordnung mit Beleuchtung, ein Verfahren zu ihrer Herstellung und ihre Verwendung.

Beleuchte Scheibenanordnungen beinhalten Scheiben und am Rand der Scheiben direkt angebrachte Leuchtmittel. Auf der Scheibenoberfläche aufgebrachte Reflexionselemente ermöglichen die Beleuchtung der Scheibenfläche. So lassen sich Innenräume aber auch Gebäudeaußenfassaden sehr gleichmäßig beleuchten. Beleuchtete Scheibenanordnungen finden sich in einer Vielzahl von Anwendungsbereichen innerhalb und außerhalb von Gebäuden und Fahrzeugen.

Im Gegensatz zu einer punktförmigen Lichtquelle, wie einer Stehlampe oder Deckenlampe, lässt sich durch eine beleuchtete Scheibenanordnung ein sehr gleichmäßiges, flächiges Licht erzeugen. In Abhängigkeit von der verwendeten Leuchtquelle und der Ansteuerelektronik lassen sich auch verschiedene Lichteffekte realisieren. Bei der Verwendung von farbigen LEDs lassen sich insbesondere verschiedene Farbeffekte kombinieren. So lassen sich bewegende Lichteffekte durch die gezielte Ansteuerung und Löschung einzelner LEDs erzeugen. Für den Betrachter scheint sich dabei das Licht in Farbwellen auszubreiten. Überlagern sich dabei mehrere Farbwellen, so ergeben sich weitere Effekte wie eine Farbmarmorierung, der sogenannte Moiré-Effekt. Diese Licht- und Farbeffekte lassen sich auch für Werbeflächen oder zur Erzeugung künstlerischer und architektonischer Effekte nutzen.

Für eine Abstrahlung des Lichtes aus der Scheibe sind auf der Scheibe angebrachte Lichtreflektoren notwendig. Dazu kann die Scheibe bedruckt oder mit entsprechenden Einritzungen versehen werden. Da das Licht der LEDs seitlich eingekoppelt wird, geht oft ein hoher Anteil des eingestrahlten Lichts verloren. Bei der Verwendung in Doppel- und Dreifachverglasungen muss die Anbringung der Lichtreflektoren berücksichtigt werden, was nicht unwesentlich die Kosten des Verfahrens erhöht. Zudem beeinflusst die Art der Verglasung ganz wesentlich die von der Scheibe abgestrahlte Lichtmenge.

DE 295 10 238 U1 offenbart ein Fenster mit im Randbereich angebrachten Lichteinstrahlmitteln oder Lichtleitern. Auf dem Fenster angebrachte Reflektoren, Lichtablenkmittel, ermöglichen ein Abstrahlen des ins Fenster eingekoppelten Lichts. Als mögliche Lichtquellen kommen Glühlampen, Leuchtstoffröhren oder LEDs in Frage.

DE 198 52 593 A1 offenbart eine Flächenleuchte mit einer transparenten Verglasung. Bei ausgeschalteter Lichtquelle ist die Scheibe transparent. Wird die Lichtquelle eingeschaltet, so funktioniert die Verglasung als Flächenleuchte.

DE 102 24 421 A1 offenbart eine Lichtwand mit Lampen, die hinter einem Computerarbeitsplatz angeordnet ist. Die Lichtwand besteht aus einer transparenten Glas- oder Kunststoffscheibe, die bevorzugt über LEDs beleuchtet wird. Die Helligkeit und die Farbanteile können über eine Steuerungseinheit geregelt werden. Die Steuerungseinheit kann direkt mit dem PC des Computerarbeitsplatzes verbunden sein und die Helligkeit des Arbeitsplatzes in Abhängigkeit von der Helligkeit des Monitors regeln.

DE 20 2006 006 051 U1 offenbart eine Fahrzeug-Heckscheibe. Am Rand der Glasscheibe sind Leuchtquellen angeordnet, die ein Aufleuchten eines auf der Scheibe angebrachten Symbols ermöglichen.

EP 1 346 178 B1 offenbart ein sandwichartiges Plattenelement. Die beiden Platten sind weitgehend lichtdurchlässig. Im Plattenzwischenraum oder an den Platten sind Solarzellenelemente angebracht. Eine Lichtquelle ist stirnseitig an mindestens einer Platte angeordnet und ermöglicht eine zusätzliche Beleuchtung.
DE 10 2005 061 855 A1 offenbart ein Glaselement als Teil einer Fassade mit lang nachleuchtendem Effekt. Das Langnachleuchtelement umfasst ein lang nachleuchtendes Pigment in einer Matrix.

DE 10 2005 036 869 A1 offenbart eine mehrschichtige Verbundstruktur zur Verkleidung der Innen- oder Außenseite von Gebäuden- oder Gebäudeteilen. Die Verbundstruktur umfasst mindestens eine lichtdurchlässige starre Schicht, mehrere Lichtleitfaser und ein oder mehrere Anschlüsse zum Verbinden der Lichtleitfasern mit einer Lichtquelle.

US 6,185,883 B1 offenbart ein Fenster mit dekorativen Schmuckelementen. Der Fensterrahmen umfasst eine Dreifachisolierverglasung mit dekorativen Elementen in der mittleren Scheibe.

Die Aufgabe der Erfindung liegt darin, eine Verglasung bereitzustellen, an der eine LED-Leiste montiert werden kann, ohne dass dies größere Umbaumaßnahmen der Verglasung erfordert. Die Verglasung soll zudem eine möglichst große Lichtmenge von der Scheibenoberfläche abstrahlen.

Die Aufgabe der vorliegenden Erfindung wird erfindungsgemäß durch eine beleuchtete Scheibenanordnung, und ein Verfahren zu deren Herstellung nach den unabhängigen Ansprüchen 1 und 13 gelöst. Bevorzugte Ausführungen gehen aus den Unteransprüchen hervor.

Die beleuchtete Scheibenanordnung umfasst mindestens eine obere Scheibe, eine Klebeschicht, eine mittlere Scheibe, ein Verbindungselement und eine untere Scheibe. Die Scheiben enthalten Materialien wie Glas und/oder transparente Polymere. Die Scheiben weisen bevorzugt eine optische Transparenz von > 85 % auf. Grundsätzlich sind verschiedene Geometrien der Scheiben möglich, beispielsweise rechteckige, trapezförmige und abgerundete Geometrien. Die obere und mittlere Scheibe bilden über die Klebeschicht eine Verbundverglasung. Die mittlere und untere Scheibe sind über Verbindungselemente verbunden. Bevorzugt sind die mittlere und untere Scheibe über zwei Verbindungselemente und einen dazwischen befindlichen Hohlraum verbunden. Die mittlere und untere Scheibe bilden bevorzugt eine Isolierverglasung.

Die obere Scheibe, Klebeschicht, mittlere Scheibe, Verbindungselement und untere Scheibe bilden bevorzugt eine Dreifachverglasung.

Am Rand der oberen Scheibe und bevorzugt auf der mittleren Scheibe der Dreifachverglasung ist ein LED-Gehäuse befestigt. Das LED-Gehäuse enthält mindestens eine LED, eine an der LED befestigte LED-Leiterplatte (PCB, printed circuit board) und einen an der LED-Leiterplatte befestigten elektrischen Anschluss.

Die LED-Leiterplatte umfasst handelsübliche Leiterplatten und/oder Platinen. Diese bestehen aus elektrisch isolierenden Materialien, auf denen elektrische Verbindungen angebracht sind. Beispiele für isolierende Materialien sind nicht leitfähige Polymere wie mit Epoxydharz getränkte Glasfaser, Teflon, Keramik und/oder Polyesterfolie. Die elektrischen Verbindungen, beispielsweise Leitungsdrähte, enthalten bevorzugt Kupfer, Eisen, Zinn, Nickel, Gold, Silber und/oder Legierungen davon. Auf den LED-Leiterplatten werden die LEDs befestigt und über die elektrischen Verbindungen kontaktiert.

Der elektrische Anschluss stellt die Verbindung zur Stromquelle her. Bevorzugt ist zwischen dem elektrischen Anschluss und der Stromquelle noch eine Steuervorrichtung angeordnet. Diese Steuervorrichtung ermöglicht die gezielte Beleuchtung einzelner LEDs. Durch die Anordnung verschiedenfarbiger LEDs auf der LED-Leiterplatte lassen sich farbige Lichteffekte erzeugen.

Die gesamte Anordnung der Komponenten aus LED, LED-Leiterplatte und elektrischem Anschluss befindet sich in einer Ummantelung. Diese Ummantelung kann als flexibles oder starres Gehäuse ausgebildet sein.

Die Dreifachverglasung weist bevorzugt eine optische Transparenz von > 60 %, bevorzugt von > 75 %, besonders bevorzugt von > 85 % auf.

Die LEDs umfassen bevorzugt LEDs (Light Emitting Diodes) und/oder OLEDs (Organic Light Emitting Diodes).

Die Klebeschicht enthält bevorzugt PVB (Polyvinylbutyral) und/oder EVA (Poly-Ethylvinylacetat). Die Klebeschicht enthält bevorzugt eine Polyesterfolie, bevorzugt Polybutylenterephthalat (PBT), Polycarbonat (PC), Polyethylenterephthalat (PET) und Polyethylennaphthalat (PEN) und/oder Gemische und/oder Copolymere davon. Die Klebeschicht kann mehrere Schichten gleicher oder unterschiedlicher Polymere enthalten.

Die Klebeschicht enthält bevorzugt Leuchtfelder. Die Leuchtfelder reflektieren, emittieren oder streuen das von den LEDs in die obere Scheibe eingekoppelte Licht nach außen. Sind nur einzelne Leuchtfelder auf oder in der Klebeschicht angeordnet, so leuchtet die Scheibe nur im Bereich der Leuchtfelder. Ist die gesamte Klebeschicht mit Reflektoren versehen, so leuchtet entsprechend die gesamte obere Scheibe.

Die obere Scheibe enthält an der Scheibenoberfläche bevorzugt Leuchtfelder. Die Leuchtfelder entsprechen den bei der Klebeschicht beschriebenen Leuchtfeldern.

Die Leuchtfelder umfassen bevorzugt Strukturen zur Lichtstreuung, besonders bevorzugt Partikel, Punktraster, Aufkleber, Anlagerungen, Einkerbungen, Einritzungen Strichraster, Aufdrucke und/oder Siebdrucke.

Die Ummantelung enthält bevorzugt ein Metall, bevorzugt Aluminium, Titan, Eisen, Chrom, Nickel, Wolfram und/oder Legierungen davon.

Die Ummantelung enthält bevorzugt ein Polymer, besonders bevorzugt Silikone, Polyisoprene, Styrol-Butadien-Kautschuk, Butadien-Acrylnitril-Kautschuk und/oder Polyacrylate sowie Gemische und/oder Copolymere davon.

Die Silikone enthalten bevorzugt RTV(raumtemperturvernetzenden)-Silikonkautschuk, HTV-(hochtemperturvernetzenden) Silikonkautschuk, peroxidischvernetzten-Silikonkautschuk und/oder additionsvernetzten-Silikonkautschuk sowie Gemische und/oder Copolymere davon.

Das LED-Gehäuse ist bevorzugt mit einem optisch transparenten Kleber und/oder Klebeband an der oberen Scheibe und/oder mittleren Scheibe befestigt. Die Wahl des Klebstoffes auf dem Klebeband richtet sich dabei nach dem Material der Scheibe oder der Ummantelung. Das optisch transparente Klebeband enthält bevorzugt auf der der Ummantelung zugewandten Seite einen Klebstoff auf Silikonbasis und auf der der Scheibe zugewandten Seite einen Klebstoff auf Acrylatbasis. So lässt sich beispielsweise eine Ummantelung aus Silikon mit einer Scheibe aus Glas oder Polyacryl fest verbinden. Das optisch transparente Klebeband wird bevorzugt durch eine Koronaentladung aktiviert.

Der optisch transparente Kleber und/oder Klebeband enthält bevorzugt Acrylatklebstoffe, Methylmethacrylatklebstoffe, Cyanacrylatklebstoffe, Polyepoxide, Silikonklebstoffe und/oder Silanvernetzende-Polymerklebstoffe sowie Gemische und/oder Copolymere davon.

Der optisch transparente Kleber und/oder Klebeband weisen bevorzugt eine optische Transparenz von > 80 %, besonders bevorzugt > 90 % auf.

Die LEDs weisen bevorzugt einen Abstand zu der oberen Scheibe von < 1 mm, bevorzugt < 0,5 mm auf.

Die LED-Leiterplatte enthält bevorzugt Silber, Kupfer, Zinn, Nickel, Gold, Aluminium, Eisen, Wolfram, Chrom und/oder Legierungen davon und/oder ein elektrisch leitfähiges Klebeband.

Die Verbindungselemente weisen bevorzugt eine Breite von 10 mm bis 20 mm auf. Die Verbindungselemente sind bevorzugt block- oder quaderförmig ausgebildet. Die Verbindungselemente enthalten bevorzugt Polymere und/oder Metalle.

Die Erfindung umfasst des Weiteren ein Verfahren zur Herstellung einer beleuchteten Scheibenanordnung. In einem ersten Schritt wird eine obere Scheibe über eine Klebeschicht mit einer mittleren Scheibe im Autoklaven verbunden. Anschließend wird mindestens eine LED an einer LED-Leiterplatte mit einem elektrischen Anschluss zu einer LED-Anordnung verbunden. Die LED-Anordnung wird mit einer Ummantelung aus Metall und/oder Polymer versehen und ein LED-Gehäuse erhalten. Das LED-Gehäuse wird am Rand der oberen Scheibe und der Oberfläche der mittleren Scheibe befestigt. In einem abschließenden Schritt werden eine mittlere Scheibe und eine untere Scheibe über zwei Verbindungselemente verbunden und bilden eine Isolierverglasung.

Die Erfindung umfasst des Weiteren die Verwendung der beleuchteten Scheibenanordnung als Gebäudeinnenbeleuchtung, Gebäudeaußenbeleuchtung, Werbeträger und/oder Fahrzeugscheibe.

Im Folgenden wird die Erfindung anhand von Zeichnungen und eines Ausführungssowie Vergleichsbeispiels näher erläutert. Die Zeichnung ist eine rein schematische Darstellung und nicht maßstabsgetreu. Sie schränkt die Erfindung in keiner Weise ein.

Ein Ausführungsbeispiel der Erfindung ist in der Zeichnung dargestellt und wird im Folgenden näher beschrieben.

Es zeigen:
Figur 1 einen Querschnitt der beleuchteten Scheibenanordnung nach dem Stand der Technik,
Figur 2 einen Querschnitt der erfindungsgemäßen beleuchteten Scheibenanordnung und
Figur 3 ein Fließschema des Verfahrens zur Herstellung der erfindungsgemäßen Scheibenanordnung.

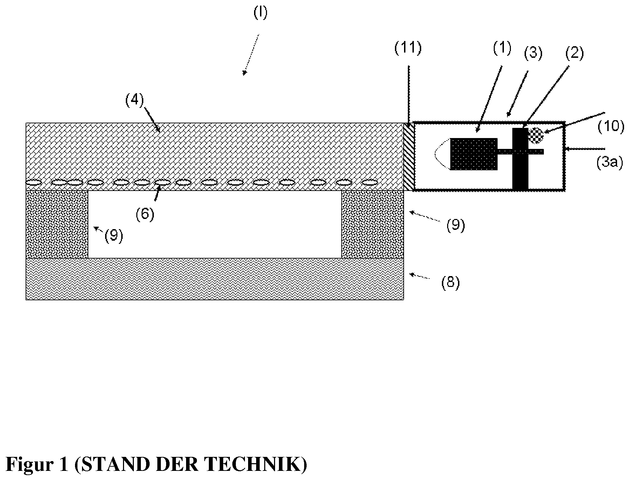

Figur 1 zeigt einen Querschnitt der beleuchteten Scheibenanordnung (I) bestehend aus einer Doppelverglasung nach dem Stand der Technik. Das LED-Gehäuse (3) enthält LEDs (1), die an einer LED-Leiterplatte (2) befestigt sind. Ein elektrischer Anschluss (10) versorgt die LEDs (1) mit Strom. Eine Ummantelung (3a) aus Aluminium bildet den äußeren Rahmen des LED-Gehäuses (3). Das LED-Gehäuse (3) ist über einen optisch transparenten Kleber (11) mit der oberen Scheibe (4) der Doppelverglasung verbunden. Zwei Verbindungselemente (9) verbinden die obere Scheibe (4) mit der unteren Scheibe (8). Leuchtfelder (6) sind auf der unteren Seite der oberen Scheibe (4) aufgedruckt.

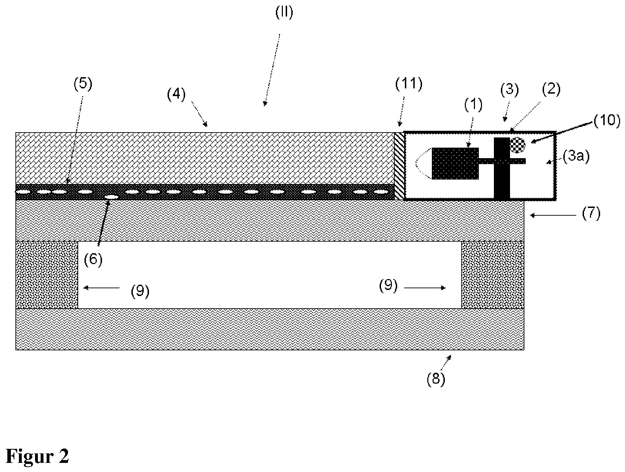

Figur 2 zeigt einen Querschnitt der erfindungsgemäßen beleuchteten Scheibenanordnung (II) bestehend aus einer Dreifachverglasung. Ein elektrischer Anschluss (10) versorgt die LEDs (1) mit Strom. Eine Ummantelung (3a) aus Aluminium bildet den äußeren Rahmen des LED-Gehäuses (3). Das LED-Gehäuse (3) wird über einen optisch transparenten Kleber (11) mit der oberen Scheibe (4), bevorzugt auch mit der mittleren Scheibe (7), der Dreifachverglasung verbunden. Die obere Scheibe (4) ist über eine Klebeschicht (5) mit der mittleren Scheibe (7) verbunden und bilden zusammen eine Verbundglasscheibe. Zwei Verbindungselemente (9) verbinden die mittlere Scheibe (7) mit der unteren Scheibe (8). Im Gegensatz zu der Scheibenanordnung (I) gemäß Stand der Technik sind in der erfindungsgemäßen Scheibenanordnung (II) Leuchtfelder (6) auf der Klebeschicht (5) aufgedruckt.

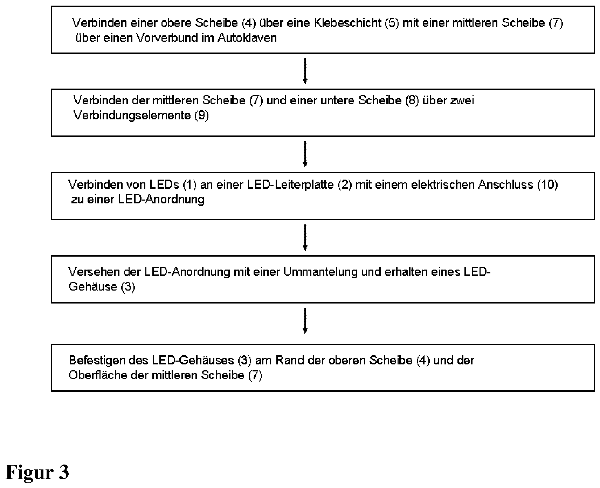

Figur 3 zeigt ein Flussdiagramm des Verfahrens zur Herstellung der erfindungsgemäßen Scheibenanordnung. In einem ersten Schritt wird eine obere Scheibe über eine Klebeschicht mit einer mittleren Scheibe in einem Vorverbundverfahren verbunden. Der Vorverbund wird beispielsweise durch das Erwärmen der Anordnung aus oberer Scheibe, Klebeschicht und mittlerer Scheibe auf 50 °C und durch das Durchlaufen einer Rollenanordnung erhalten. Zweck des Vorverbundes ist es, vor dem endgültigen Verbinden der mittleren und oberen Scheibe, überschüssige Luft zu entfernen. Der Vorverbund aus oberer Scheibe, Klebeschicht und mittlerer Scheibe wird anschließend im Autoklaven verbunden. In einem weiteren Schritt werden die mittlere Scheibe und eine untere Scheibe über zwei Verbindungselemente verbunden und bilden eine Isolierverglasung. Zur Versiegelung des Zwischenraums können noch Polymere oder Dichtungsmassen auf Silikon-, Polyurethan-, Acrylate-, silanmodifizierte Polymere (SMP), Butylkautschuk und/oder Polysulfidbasis verwendet werden. Der Zwischenraum zwischen mittlerer und unterer Scheibe wird bevorzugt mit einem Inertgas wie N₂, CO₂, He, Ne, Ar oder Vakuum gefüllt. Anschließend wird mindestens eine LED an einer LED-Leiterplatte mit einem elektrischen Anschluss zu einer LED-Anordnung verbunden. Die LED-Anordnung wird mit einer Ummantelung versehen und so ein LED-Gehäuse erhalten. Das LED-Gehäuse wird am Rand der oberen Scheibe und der Oberfläche der mittleren Scheibe befestigt.

Im Folgenden wird die Erfindung anhand eines Beispiels der erfindungsgemäßen beleuchteten Scheibenanordnung und eines Vergleichsbeispiels einer beleuchteten Scheibenanordnung nach dem Stand der Technik näher erläutert.

In einer Versuchsreihe wurden die abgegebene Lichtmenge einer erfindungsgemäßen Scheibenanordnung (Alle Scheiben aus Diamant® -Glass, SAINT-GOBAIN GLASS) und die abgegebene Lichtmenge einer beleuchteten Scheibenanordnung (Alle Scheiben aus Diamant® -Glass, SAINT-GOBAIN GLASS) nach dem Stand der Technik bestimmt.

### Beispiel 1 (Vergleichsbeispiel)

Das Beispiel 1 entspricht der in Figur 1 beschriebenen Anordnung. Das LED-Gehäuse (3) (Länge von 450 mm, Breite von 18 mm und Höhe von 11,4 mm) enthielt in einem Aluminiumrahmen 72 LEDs (24x Blau, 24x Rot, 24x Grün). Alle Tests wurden bei 100 % Volllast (24 V und 6 Watt) der LEDs durchgeführt. Die obere Scheibe wies eine Dicke von 12 mm auf und die untere Scheibe (8) wies eine Dicke von 4 mm auf. Die Verbindungsstücke (9) wiesen eine Breite von 16 mm als Abstand der oberen Scheibe (4) und unteren Scheibe (8) auf.

### Beispiel 2 (erfindungsgemäß)

Das Beispiel 2 entspricht der in Figur 2 beschriebenen Anordnung. Das LED-Gehäuse (3) (Länge von 450 mm, Breite von 18 mm und Höhe von 11,4 mm) enthielt in einem Aluminiumrahmen 72 LEDs (24x Blau, 24x Rot, 24x Grün). Alle Tests wurden bei 100 % Volllast (24 V und 6 Watt) der LEDs durchgeführt. Die obere Scheibe wies eine Dicke von 12 mm auf, die mittlere Scheibe (7) und die untere Scheibe (8) wiesen eine Dicke von 4 mm auf. Die Klebeschicht (5) aus PVB wies eine Dicke von 0,76 mm vor der Laminierung auf. Die Verbindungsstücke (9) wiesen eine Breite von 16 mm als Abstand der mittleren Scheibe (7) und unteren Scheibe (8) auf.

Die abgestrahlte Lichtmenge einer Fläche von 39 cm x 39 cm = 1521 cm² der oberen Scheibe (4) der Beispiele 1 und 2 wurde in einem Abstand von 2,20 m mit einem Lumi CAM 4.0 /1300 Color (Instrument Systems, 81673 München, Deutschland) bestimmt. Die Anzahl und Größe der Leuchtfelder (6), auf der Unterseite der oberen Scheibe (4) in Beispiel 1 und der Klebeschicht (5) in Beispiel 2, war gleich. Die Ergebnisse sind in Tabelle 1 zusammengefasst.

| | Lichtmenge [cd/m²] |
|---|---|
| Beispiel 1 (Vergleichsbeispiel) | 36 |
| Beispiel 2 (erfindungsgemäß) | 50 |

Das erfindungsgemäße Beispiel 2 emittierte eine um 28 % höhere Lichtmenge als das Beispiel 1 nach dem Stand der Technik. Diese Ergebnisse waren überraschend und unerwartet.

### Bezugszeichenliste

- (1): LED,
- (2): LED-Leiterplatte,
- (3): LED-Gehäuse,
- (3a): Ummantelung,
- (4): obere Scheibe,
- (5): Klebeschicht,
- (6): Leuchtfelder,
- (7): mittlere Scheibe,
- (8): untere Scheibe,
- (9): Verbindungselement,
- (10): elektrischer Anschluss,
- (11): optisch transparenter Kleber oder Klebeband,
- (I): beleuchtete Scheibenanordnung nach dem Stand der Technik und
- (II): erfindungsgemäße beleuchte Scheibenanordnung.

## Patentansprüche

1. Beleuchtete Scheibenanordnung mindestens umfassend:
- eine obere Scheibe (4),
- eine Klebeschicht (5) zwischen der oberen Scheibe (4) und der mittleren Scheibe (7), wobei die Klebeschicht (5) ein oder mehrere Leuchtfelder (6) enthält,
- eine mittlere Scheibe (7),
- ein Verbindungselement (9) zum Verbinden der mittleren Scheibe (7) und der unteren Scheibe (8),
- eine untere Scheibe (8) und
ein LED-Gehäuse (3) befestigt am Rand der oberen Scheibe (4) und auf der Oberfläche der mittleren Scheibe (7), umfassend:
- eine LED (1),
- eine an der LED (1) befestigte LED-Leiterplatte (2),
- ein an der LED-Leiterplatte (2) befestigter elektrischer Anschluss (10) und
- eine Ummantelung (3a) der LED (1), LED-Leiterplatte (2) und des elektrischen Anschlusses (10).

2. Scheibenanordnung nach Anspruch 1, wobei die obere Scheibe (4), die Klebeschicht (5),die mittlere Scheibe (7), das Verbindungselement (9) und die untere Scheibe (8) eine Dreifachverglasung bilden.

3. Scheibenanordnung nach Anspruch 2, wobei die Dreifachverglasung eine optische Transparenz von >60 %, bevorzugt >75 % und besonders bevorzugt >85 % aufweist.

4. Scheibenanordnung nach einem der Ansprüche 1 bis 3, wobei die obere Scheibe (4) ein oder mehrere Leuchtfelder (6) enthält.

5. Scheibenanordnung nach Anspruch 4 wobei die Leuchtfelder (6) Partikel, Punktraster, Strichraster, Aufkleber, Anlagerung, Einkerbungen, Siebdrucke, Einritzungen und/oder Kombinationen davon umfassen.

6. Scheibenanordnung nach einem der Ansprüche 1 bis 5, wobei die Ummantelung (3a) ein Metall, bevorzugt Aluminium, Titan, Eisen, Chrom, Nickel, Wolfram und/oder Legierungen enthält.

7. Scheibenanordnung nach einem der Ansprüche 1 bis 6, wobei die Ummantelung (3a) ein Polymer, bevorzugt Silikone, Polyisoprene, Styrol-Butadien-Kautschuk, oder Butadien-Acrylnitril-Kautschuk und/oder Polyacrylate sowie Gemische und/oder Copolymere davon enthält.

8. Scheibenanordnung nach Anspruch 7, wobei die Silikone RTV-Silikonkautschuk, HTV-Silikonkautschuk, peroxidisch vernetzten Silikonkautschuk und/oder additionsvernetzten Silikonkautschuk sowie Gemische und/oder Copolymere davon enthalten.

9. Scheibenanordnung nach einem der Ansprüche 1 bis 8, wobei das LED-Gehäuse (3) mit einem optisch transparenten Kleber und/oder Klebeband (11) an der oberen Scheibe und der mittleren Scheibe (7) befestigt ist.

10. Scheibenanordnung nach einem der Ansprüche 1 bis 9, wobei der optisch transparente Kleber und/oder das Klebeband (11) Acrylatklebstoffe, Methylmethacrylatklebstoffe, Cyanacrylatklebstoffe, Polyepoxide, Silikonklebstoffe und/oder silanvernetzende Polymerklebstoffe, RTV-Silikonkautschuk, HTV-Silikonkautschuk, peroxidisch vernetzten Silikonkautschuk und/oder additionsvernetzten Silikonkautschuk sowie Gemische und/oder Copolymere davon enthält.

11. Scheibenanordnung nach einem der Ansprüche 1 bis 10, wobei die LED (1) einen Abstand (A) zu der oberen Scheibe (4) von < 1 mm, bevorzugt < 0,5 mm aufweist.

12. Scheibenanordnung nach einem der Ansprüche 1 bis 11, wobei das Verbindungselement (9) eine Breite von 10 mm bis 20 mm aufweist.

13. Verfahren zur Herstellung einer beleuchteten Scheibenanordnung, wobei
a. eine obere Scheibe (4) und eine mittlere Scheibe (7) mit einer Klebeschicht (5), wobei die Klebeschicht (5) ein oder mehrere Leuchtfelder (6) enthält, im Autoklaven verbunden werden und
b. mindestens eine LED (1) an einer LED-Leiterplatte (2) und ein elektrischer Anschluss (10) zu einer LED-Anordnung verbunden und mit einer Ummantelung (3a) versehen werden, wobei ein LED-Gehäuse (3) erhalten wird,
c. das LED-Gehäuse (3) am Rand der oberen Scheibe (4) und der Oberfläche der mittleren Scheibe (7) befestigt wird und
d. die mittlere Scheibe (7) und eine untere Scheibe (8) über ein Verbindungselement (9) verbunden werden.

14. Verwendung der beleuchteten Scheibenanordnung nach einem der Ansprüche 1 bis 12 als Gebäudeinnenbeleuchtung, Gebäudeaußenbeleuchtung, Werbeträger und/oder Fahrzeugscheibe.

## Claims

1. Illuminated pane arrangement at least comprising:
- an upper pane (4),
- an adhesive layer (5) between the upper pane (4) and the middle pane (7), wherein the adhesive layer (5) includes one or a plurality of luminous fields (6),
- a middle pane (7),
- a connecting element (9) for connecting the middle pane (7) and the lower pane (8),
- a lower pane (8), and
an LED housing (3) secured to the edge of the upper pane (4) and on the surface of the middle pane (7), comprising:
- an LED (1),
- an LED circuit board (2) secured to the LED (1),
- an electrical connector (10) secured to the LED circuit board (2), and
- a casing (3a) of the LED (1), the LED circuit board (2), and the electrical connector (10).

2. Pane arrangement according to claim 1, wherein the upper pane (4), the adhesive layer (5), the middle pane (7), the connecting element (9), and the lower pane (8) form a triple glazing.

3. Pane arrangement according to claim 2, wherein the triple glazing has optical transparency of > 60%, preferably > 75%, and particularly preferably > 85%.

4. Pane arrangement according to one of claims 1 through 3, wherein the upper pane (4) includes one or a plurality of luminous fields (6).

5. Pane arrangement according to claim 4, wherein the luminous fields (6) comprise particles, dot grids, line grids, stickers, deposits, indentations, screen prints, incisions, and/or combinations thereof.

6. Pane arrangement according to one of claims 1 through 5, wherein the casing (3a) includes a metal, preferably aluminum, titanium, iron, chromium, nickel, tungsten, and/or alloys.

7. Pane arrangement according to one of claims 1 through 6, wherein the casing (3a) includes a polymer, preferably silicones, polyisoprenes, styrene butadiene rubber, butadiene acrylonitrile rubber, and/or polyacrylates as well as mixtures and/or copolymers thereof.

8. Pane arrangement according to claim 7, wherein the silicones include RTV silicone rubber, HTV silicone rubber, peroxide vulcanizing silicone rubber, and/or addition vulcanizing silicone rubber as well as mixtures and/or copolymers thereof.

9. Pane arrangement according to one of claims 1 through 8, wherein the LED housing (3) is secured to the upper pane (4) and the middle pane (7) with an optically transparent adhesive and/or adhesive tape (11).

10. Pane arrangement according to one of claims 1 through 9, wherein the optically transparent adhesive and/or the adhesive tape (11) contains acrylate adhesives, methylmethacrylate adhesives, cyanoacrylate adhesives, polyepoxides, silicone adhesives, and/or silane cross-linking polymer adhesives, RTV silicone rubber, HTV silicone rubber, peroxide vulcanizing silicone rubber, and/or addition vulcanizing silicone rubber as well as mixtures and/or copolymers thereof.

11. Pane arrangement according to one of claims 1 through 10, wherein the LED (1) has a distance (A) from the upper pane (4) of < 1 mm, preferably < 0.5 mm.

12. Pane arrangement according to one of claims 1 through 11, wherein the connecting element (9) has a width of 10 mm to 20 mm.

13. Method for producing an illuminated pane arrangement, wherein
a. an upper pane (4) and a middle pane (7) are bonded with an adhesive layer (5) in the autoclave, and
b. at least one LED (1) on an LED circuit board (2) and an electrical connector (10) are connected to form an LED arrangement and are provided with a casing (3a), wherein an LED housing (3) is obtained,
c. the LED housing (3) is secured to the edge of the upper pane (4) and the surface of the middle pane (7), and
d. the middle pane (7) and a lower pane (8) are connected via two connecting elements (9).

14. Use of the illuminated pane arrangement according to one of claims 1 through 12 as building interior illumination, building exterior illumination, an advertising medium, and/or a vehicle window pane.

## Revendications

1. Ensemble de panneaux de verre lumineux au moins comportant :
- un panneau de verre supérieur (4) ;
- une couche adhésive (5) entre le panneau de verre supérieur (4) et le panneau de verre intermédiaire (7), la couche adhésive (5) contenant une ou plusieurs zones lumineuses (6) ;
- un panneau de verre intermédiaire (7) ;
- un élément de liaison (9) pour la liaison du panneau de verre intermédiaire (7) et du panneau de verre inférieur (8) ;
- un panneau de verre inférieur (8) ; et
- un boîtier de LED (3) fixé sur le bord du panneau de verre supérieur (4) et sur la surface du panneau de verre intermédiaire (7), comportant :
- une LED (1),
- une carte imprimée à LED (2) fixée sur la LED (1) ;
- une borne électrique (10) fixée sur la carte imprimée à LED (2) ; et
- une gaine (3a) de la LED (1), de la carte imprimée à LED (2) et de la borne électrique (10).

2. Ensemble de panneaux de verre selon la revendication 1, dans lequel le panneau de verre supérieur (4), la couche adhésive (5), le panneau de verre intermédiaire (7), l'élément de liaison (9) et le panneau de verre inférieur (8) forment un triple vitrage.

3. Ensemble de panneaux de verre selon la revendication 2, dans lequel le triple vitrage présente une transparence optique de > 60 %, de préférence > 75 % et de manière particulièrement préférée > 85 %.

4. Ensemble de panneaux de verre selon l'une des revendications 1 à 3, dans lequel le panneau de verre supérieur (4) contient une ou plusieurs zones lumineuses (6).

5. Ensemble de panneaux de verre selon la revendication 4, dans lequel les zones lumineuses (6) comportent des particules, une trame de points, une trame de traits, une étiquette adhésive, un dépôt, des indentations, des impressions sérigraphiques, des rainurages et/ou des combinaisons de ceux-ci.

6. Ensemble de panneaux de verre selon l'une des revendications 1 à 5, dans lequel la gaine (3a) contient un métal, de préférence de l'aluminium, du titane, du fer, du chrome, du nickel, du tungstène et/ou des alliages.

7. Ensemble de panneaux de verre selon l'une des revendications 1 à 6, dans lequel la gaine (3a) contient un polymère, de préférence du silicone, du polyisoprène, du caoutchouc styrène-butadiène ou du caoutchouc butadiène-acrylonitrile et/ou des polyacrylates ainsi que les mélanges ou copolymères de ceux-ci.

8. Ensemble de panneaux de verre selon la revendication 7, dans lequel les silicones contiennent du caoutchouc silicone RTV, du caoutchouc silicone HTV, du caoutchouc silicone réticulé par peroxyde et/ou du caoutchouc silicone réticulé par addition ainsi que des mélanges et/ou copolymères de ceux-ci.

9. Ensemble de panneaux de verre selon l'une des revendications 1 à 8, dans lequel le boîtier de LED (3) est fixé sur le panneau de verre supérieur et le panneau de verre intermédiaire (7) au moyen d'un adhésif et/ou d'un ruban adhésif (11) optiquement transparent.

10. Ensemble de panneaux de verre selon l'une des revendications 1 à 9, dans lequel l'adhésif optiquement transparent et/ou le ruban adhésif (11) contiennent des adhésifs à acrylate, des adhésifs à méthacrylate de méthyle, des adhésifs à cyanacrylate, des polyépoxydes, des adhésifs à silicone et/ou des adhésifs polymères à réticulation par silane, du caoutchouc silicone RTV, du caoutchouc silicone HTV, du caoutchouc silicone réticulé par peroxyde et/ou du caoutchouc silicone réticulé par addition ainsi que des mélanges et/ou copolymères de ceux-ci.

11. Ensemble de panneaux de verre selon l'une des revendications 1 à 10, dans lequel la LED (1) présente une distance (A) au panneau de verre supérieur (4) de < 1 mm, de préférence < 0,5 mm.

12. Ensemble de panneaux de verre selon l'une des revendications 1 à 11, dans lequel l'élément de liaison (9) présente une largeur de 10 mm à 20 mm.

13. Procédé de fabrication d'un ensemble de panneaux de verre lumineux, dans lequel
a. un panneau de verre supérieur (4) et un panneau de verre intermédiaire (7) sont reliés en autoclave par une couche adhésive (5), la couche adhésive (5) contenant une ou plusieurs zones lumineuses (6) ; et
b. au moins une LED (1) sur une carte imprimée à LED (2) et une borne électrique (10) sont reliées en un dispositif LED et dotées d'une gaine (3a), un boîtier de LED (3) étant obtenu ;
c. le boîtier de LED (3) est fixé sur le bord du panneau de verre supérieur (4) et la surface du panneau de verre intermédiaire (7) ; et
d. le panneau de verre intermédiaire (7) et un panneau de verre inférieur (8) sont reliés par un élément de liaison (9).

14. Utilisation de l'ensemble de panneaux de verre lumineux selon l'une des revendications 1 à 12 en tant qu'éclairage d'intérieur de bâtiment, éclairage d'extérieur de bâtiment, affiche publicitaire et/ou vitre de véhicule.
